# EUROPÄISCHE PATENTSCHRIFT

(11) **EP 1 173 910 B1**
(45) Veröffentlichungstag und Bekanntmachung des Hinweises auf die Patenterteilung: **02.05.2007**
(21) Anmeldenummer: 01907528.2
(22) Anmeldetag: 13.02.2001
(51) Int. Cl.: H02B 1/052, H02B 1/26

(54) **BEFESTIGUNGSADAPTER FÜR BEFEHLS- BZW. MELDEGERÄTE**
MOUNTING ADAPTER FOR CONTROL OR SIGNALLING DEVICES
ADAPTATEUR DE FIXATION POUR APPAREILS DE COMMANDE OU DE SIGNALISATION

(30) Priorität: 26.02.2000 DE 10009308
(43) Veröffentlichungstag der Anmeldung: 23.01.2002
(73) Patentinhaber: Moeller GmbH, 53115 Bonn (DE)
(72) Erfinder: BONN, Alfred, 53227 Bonn (DE); DREESEN, Hubert, 53332 Bornheim (DE)
(86) Internationale Anmeldenummer: PCT/EP2001/001575
(87) Internationale Veröffentlichungsnummer: WO 2001/063712

(56) Entgegenhaltungen:
- DE-U- 9 419 770
- DE-U- 29 610 480

## Beschreibung

### Technisches Gebiet

Die Erfindung betrifft einen Befestigungsadapter für Befehls- bzw. Meldegeräte nach dem Übergriff von Anspruch 1.

### Stand der Technik

In dem von der Fa. Klöckner-Moeller GmbH im Februar 1991 herausgegebenen Anwendungshandbuch "Automatisieren und Energie verteilen - Technische Informationen" ist auf Seite 4/7 ein derartiger Befestigungsadapter beschrieben, der für den sogenannten Zwischeneinbau von Befehls- bzw. Meldegeräten in Gehäusen und vorzugsweise mit anderen elektrischen Geräten zur Anpassung an unterschiedliche Einbautiefen verwendet wird. Der teleskopartig ausgeführte Befestigungsadapter ist in einem Bereich von 64 bis 95 mm stufenlos verstellbar. Eine seitlich angebrachte Skala erleichtert das Einstellen der erforderlichen Einbautiefe. Für die verschiedenen Montagesysteme Tragschiene und Montageplatte weist der Befestigungsadapter an seinem hinteren Bereich Schnappelemente und Schraubverbindungselemente auf. An dem vorderen Bereich weist der Befestigungsadapter allerdings nur Rastelemente für aufzurastende Kontakt- oder Lampenelemente auf. Die mit den Kontakt- oder Lampenelementen zu verbindenden Frontelemente werden von diesen Rastelementen nicht erfasst und benötigen eine eigene, davon getrennte Befestigungsebene, z.B. eine Tür oder einen Deckel. Durch die getrennte Befestigung der Frontelemente ist eine aufwendige Ausrichtung zwischen den Frontelementen einerseits und den Kontakt- oder Lampenelementen anderseits notwendig.

### Darstellung der Erfindung

Der Erfindung liegt daher die Aufgabe zugrunde, den Zwischeneinbau von Befehls- bzw. Meldegeräten zu erleichtern.

Ausgehend von einem Befestigungsadapter der eingangs genannten Art wird die Aufgabe erfindungsgemäß durch die kennzeichnenden Merkmale des unabhängigen Anspruches gelöst, während dem abhängigen Anspruch eine vorteilhafte Weiterbildung der Erfindung zu entnehmen ist.

Durch die Befestigungsöffnung ist von außen das Frontelement einzuführen und mit den von innen herangeführten übrigen Teilen des Befehls- bzw. Meldegerätes zu verbinden. Im allgemeinen geschieht dies durch rastende Verbindungselemente. Das komplette Befehls- bzw. Meldegerät wird am vorderen Bereich des Befestigungsadapters in üblicher Weise durch eine von hinten über das Frontelement geschraubte Überwurfmutter gehalten. Damit können Befehls- bzw. Meldegeräte innerhalb eines Gehäuses oder eines Installationsverteiler-Systems unter Wegfall aufwendiger Maßnahmen zur Tiefenausrichtung direkt neben anderen Geräten, wie z.B. Sicherungsautomaten, Fehlerstrom-Schutzschaltem und Motorschutzschaltern installiert werden.

Eine vorteilhafte Ausgestaltung der Erfindung besteht in der Ausbildung des Befestigungsadapters in der Art eines Außenskeletts, wodurch ein ausreichender innerer Montageraum für die mit dem Frontelement zu verbindenden übrigen Teile des Befehls- bzw. Meldegerätes gebildet wird. Weiterhin erlauben die zwischen den Skelettteilen belassenen Öffnungen das bequeme Ergreifen der zum kompletten Befehl- bzw. Meldegerät zu montierenden Teile.

### Kurze Beschreibung der Zeichnungen

Weitere Einzelheiten und Vorteile der Erfindung ergeben sich aus dem folgenden, anhand von Figuren erläuterten Ausführungsbeispiel. Es zeigen
- Figur 1:: einen erfindungsgemäßen Befestigungsadapter in perspektivischer Ansicht schräg von vom;
- Figur 2:: desgleichen in Ansicht schräg von hinten;
- Figur 3:: den Befestigungsadapter hälftig weggebrochen mit einem Befehlsgerät und auf einer Tragschiene.

### Bester Weg zur Ausführung der Erfindung

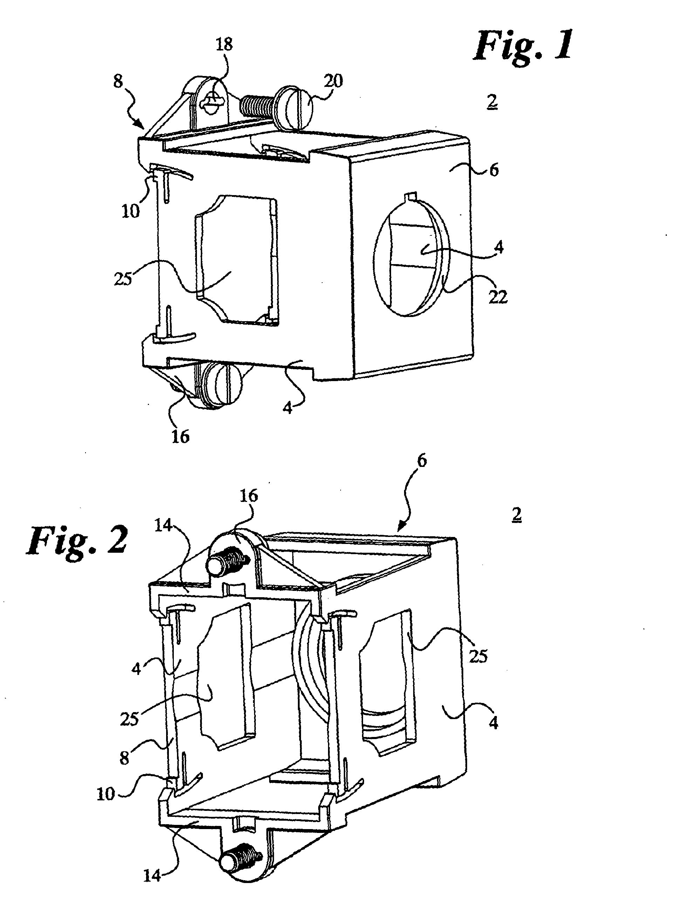

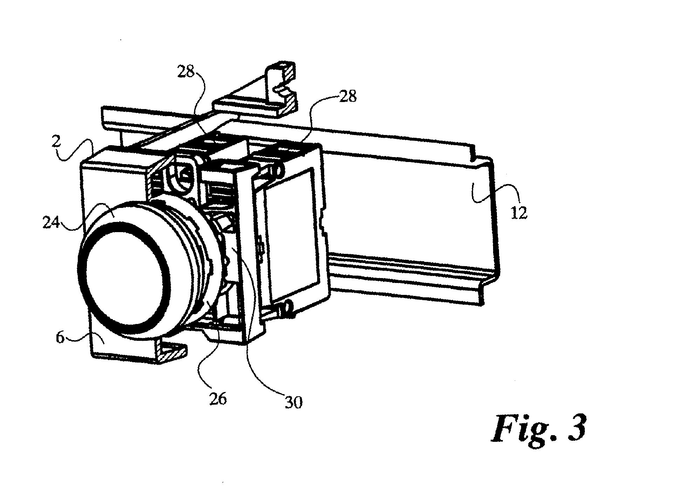

Nach Fig. 1 und Fig. 2 ist der Befestigungsadapter 2 in der Art eines im wesentlichen quaderförmigen Außenskeletts aus Kunststoff ausgebildet. Er besteht aus zwei gegenüberstehenden Seitenwänden 4, einem ebenen vorderen Bereich 6 und einem rahmenartigen hinteren Bereich 8. Der hintere Bereich 8 besitzt vier ecknahe Schnappelemente 10 zum Aufschnappen des Befestigungsadapters 2 auf eine Tragschiene 12 (siehe Fig. 3). Der hintere Bereich 8 weist mittig und nach außen gerichtet an den beiden nicht zu den Seitenwänden 4 gehörigen Stegen 14 jeweils eine ohrenartige Ausbildung 16 auf. Die Ausbildungen 16 besitzen Schraubverbindungselemente in Form jeweils einer Durchtrittsöffnung 18 für Schrauben 20, mit denen der Befestigungsadapter 2 alternativ auf einer Montageplatte befestigt werden kann.

Im vorderen Bereich 6 ist mittig eine kreisförmige Befestigungsöffnung 22 vorgesehen, durch die von vorne der mit einem Außengewinde versehene Teil eines Frontelementes 24 eines Befehlsgerätes (siehe Fig. 3) gesteckt werden kann. Die Seitenwände 4 sind mit großflächigen Öffnungen 25 ausgestattet. Das Außenskelett des Befestigungsadapter 2 ist so gestaltet, dass er einerseits einen ausreichend großen Raum für die mit dem Frontelement 24 zu verbindenden Teile des Befehlsgerätes bietet und anderseits von allen Seiten Zugang für die Montage des Befehlsgerätes erlaubt. Aus der Darstellung nach Fig. 3 ist zu erkennen, dass das Frontelement 24 mit Hilfe einer von hinten aufgeschraubten Überwurfmutter 26 am vorderen Bereich 6 befestigt ist und dass die Kontaktelemente 28 des Befehlsgerätes innerhalb des Befestigungsadapters 2 über ein übliches rastendes Verbindungselement 30 mit dem Frontelement 24 verbunden sind.

Die vorliegende Erfindung ist nicht auf die vorstehend beschriebene Ausführungsform beschränkt, sondern umfasst auch alle im Sinne der Erfindung gleichwirkenden Ausführungsformen. So lässt sich die Erfindung beispielsweise dahingehend weiterbilden, dass der Befestigungsadapter einer Baureihe für unterschiedliche Standard-Einbautiefen und/oder mit einer unterschiedlichen Anzahl von Befestigungsöffnungen angehört.

## Patentansprüche

1. Befestigungsadapter für Befehls- bzw. Meldegeräte mit jeweils einem Frontelement (24), wobei der Befestigungsadapter (2) am hinteren Bereich (8) Schnappelemente (10) und Schraubverbindungselemente (18) zum Befestigen auf einer Tragschiene (12) bzw. einer Montageplatte aufweist, **dadurch gekennzeichnet, dass** am vorderen, eben ausgebildeten Bereich (6) mindestens eine Befestigungsöffnung (22) für das Frontelement (24) vorgesehen ist.

2. Befestigungsadapter nach Anspruch 1, **gekennzeichnet durch** ein im wesentlichen quaderförmiges Außenskelett, zwischen dessen vorderen und hinteren Bereich (6; 8) Raum für die mit dem Frontelement (24) zu verbindenden Teile (26, 28, 30) der Befehls- bzw. Meldegeräte vorgesehen ist.

## Claims

1. A mounting adapter for control or signalling devices with in each case one front element (24), the mounting adapter (2) comprising in the rear area (8) snap-fit elements (10) and screw connection elements (18) for fastening on a mounting rail (12) or a mounting plate, **characterised in that** at least one mounting opening (22) for the front element (24) is provided on the front, flat area (6).

2. A mounting adapter according to claim 1, **characterised by** a substantially cuboid external framework, between the front and rear areas (6; 8) of which space is provided for the parts (26, 28, 30) of the control or signalling devices to be connected to the front element (24).

## Revendications

1. Adaptateur de fixation pour des dispositifs de commande ou de signalisation, comprenant respectivement un élément frontal (24), l'adaptateur de fixation (2) comprenant au niveau de sa région arrière (8) des éléments d'encliquetage (10) et des éléments d'assemblage à vis (18) en vue de la fixation sur un rail de support (12) ou une plaque de montage, **caractérisé en ce que** la région avant à configuration plane (6) comporte au moins une ouverture de fixation (22) de l'élément frontal (24).

2. Adaptateur de fixation selon la revendication 1, **caractérisé en ce que** qu'il comporte une ossature externe ayant pour l'essentiel une forme carrée, un espace pour les parties (26, 28, 30) des dispositifs de commande et de signalisation devant être reliées à l'élément frontal (24) étant établi entre les régions avant et arrière correspondantes (6; 8).
